# FASCICULE DE BREVET EUROPEEN

(11) **EP 0 514 257 B1**
(45) Date de publication et mention de la délivrance du brevet: **15.02.1995**
(21) Numéro de dépôt: 92401294.1
(22) Date de dépôt: 12.05.1992
(51) Int. Cl.: G21C 7/08

(54) **Dispositif de guidage vertical de grappe de commande pour réacteur nucléaire**
Vertikale Führungsvorrichtung für ein Regelstabbündel eines Kernreaktors
Vertical guiding device for control cluster of a nuclear reactor

(30) Priorité: 15.05.1991 FR 9105889
(43) Date de publication de la demande: 19.11.1992
(73) Titulaire: FRAMATOME, 92400 Courbevoie (FR)
(72) Inventeur: Barbe, Gérard, F-92500 Rueil Malmaison (FR)
(74) Mandataire: Fort, Jacques

(56) Documents cités:
- EP-A- 0 079 828
- FR-A- 2 397 043

## Description

La présente invention a pour objet un dispositif de guidage de grappe de commande pour réacteur nucléaire et elle trouve une application particulièrement importante dans les réacteurs à eau sous pression et, parmi ces derniers, dans les réacteurs à neutrons thermiques ou à variation de spectre.

Dans les réacteurs à eau sous pression actuels, la réactivité est commandée notamment à l'aide de grappes de contrôle comprenant chacune un faisceau de crayons suspendus à une araignée à bras radiaux portée par une tige verticale de commande de la grappe, permettant de déplacer la grappe entre une position basse où elle est insérée à peu près complètement dans le coeur du réacteur et une position haute où elle se trouve dans des équipements internes supérieurs du réacteur.

Les crayons sont guidés dans le coeur par des tubes-guides prévus dans les assemblages combustibles. Au-dessus du coeur, ces crayons, très longs et minces, doivent être guidés dans les internes supérieurs par un dispositif. Un tel dispositif connu (FR-A-2397043) est conforme au préambule de la revendication 1.

Jusqu'ici, on a cherché à réduire le plus possible les gradients de pression qui s'exercent sur les crayons dans le sens horizontal, en partant de l'hypothèse que ces gradients de pression appliquent le crayon contre les lèvres de la fente de passage de l'araignée et provoquent une usure par frottement du crayon. Pour réaliser cet équilibrage, dans des dispositifs de guidage où les tubes guident des crayons individuels et les fourreaux guident des paires de crayons, on a en particulier pratiqué des trous d'équilibrage de pression dans la paroi des fourreaux de guidage, remplacé les fourreaux par des carters laissant un jeu d'équilibrage des pressions EP-A-0128091 (FR-A-2 547 100) et pratiqué, dans les lèvres de la fente, des échancrures constituant des ouvertures d'équilibrage (EP-A-079828 correspondant à FR-A-2 516 691).

Dans une telle disposition, les moyens de guidage continus délimitent un canal ascendant unique pour le réfrigérant. L'étude de la répartition des pressions et des vitesses montre que cette répartition tend à plaquer les crayons vers le centre de la grappe dans la partie inférieure de la zone de guidage continu, puis vers l'extérieur dans la partie haute de la zone de guidage continu, du fait que la plus grande partie du débit est déviée vers des ouvertures de sortie de réfrigérant percées dans l'enveloppe en amont de la zone de guidage discontinu.

Cette différence d'action provoque une forte instabilité des crayons et est source de vibrations.

Il a été constaté, dans certains types de réacteurs au moins, que la vibration des crayons est une cause prépondérante d'usure, notamment aux emplacements de contact des crayons avec les plaques horizontales dans la zone où le guidage ne s'effectue que de façon discontinue, par ces plaques réparties.

Au surplus il a été constaté que ceux des crayons qui sont situés les plus à l'extérieur dans le sens radial, dans les fourreaux, sont fortement plaqués vers l'axe du dispositif, ce qui accélère l'usure par frottement.

La présente invention vise à fournir un dispositif de guidage vertical de grappes répondant mieux que ceux antérieurement connus aux exigences de la pratique, notamment en évitant une inversion du sens des efforts exercés sur les crayons en passant de la zone de guidage continu à la zone de guidage discontinu.

Dans ce but l'invention propose notamment un dispositif caractérisé en ce que les fourreaux délimitent entre eux des passages de guidage des crayons de la rangée interne et séparent un canal central de réfrigérant de canaux périphériques qui communiquent entre eux, dans lesquels débouchent des ouvertures de sortie du réfrigérant ménagées dans l'enveloppe.

Dans un mode avantageux de réalisation, chaque fourreau contient un passage de guidage d'un seul crayon, appartenant à la rangée externe, et est percé de trous dirigés radialement vers l'extérieur de mise en communication du passage avec les canaux périphériques. Les crayons de la rangée périphérique autres que ceux qui sont guidés dans les fourreaux peuvent être guidés par des tubes disposés entre les fourreaux et présentant une fente radiale de passage d'un bras de l'araignée.

Dans cette disposition, le réfrigérant qui pénètre dans le canal central s'écoule en quasi-totalité dans le sens vertical ascendant jusqu'aux fuites qui subsistent entre les plaques horizontales de guidage, dans la zone de guidage discontinu, et l'enveloppe. La plus grande partie du débit qui sort d'un assemblage pénètre dans les canaux périphériques et s'échappe par les ouverture de la partie basse de l'enveloppe, directement vers l'extérieur de l'enveloppe.

Ainsi le canal central est en surpression par rapport à l'extérieur de l'enveloppe. De ce fait les crayons de la rangée radialement interne sont soumis à cette surpression et donc plaqués vers l'extérieur, ce qui évite l'excitation de vibrations et l'usure sur les plaques horizontales de la partie haute, à guidage discontinu. Cette excitation est d'autant plus faible qu'il n'y a pratiquement plus d'écoulement radial au niveau des crayons vers le haut de la partie haute, là où les crayons ne sont pas protégés entre les plaques.

Dans les fourreaux, les crayons de la rangée externe sont également soumis à une surpression dirigée du centre vers l'extérieur, si des trous ou lumière sont prévus dans ces fourreaux. Les crayons guidés par les tubes fendus éventuels sont soumis à une différence de pression dirigés radialement vers l'intérieur. L'effort radial dirigé vers l'extérieur à la partie supérieur de l'enveloppe peut être très faible et donc ne pas provoquer, par son action en opposition aux forces agissant à la partie inférieure, des vibrations dommageables.

La grande latitude dont dispose le concepteur dans le tracé des fourreaux et dans celui des ouvertures d'entrée du réfrigérant à l'intérieur de l'enveloppe permet d'adapter la répartition des débits entre le canal central, de forme étoilée, et les canaux périphériques et en particulier d'ajuster la force dirigée radialement vers l'extérieur qui plaque les crayons contre la paroi de leur passage.

L'invention sera mieux comprise à la lecture de la description qui suit d'un mode particulier de réalisation, donné à titre d'exemple non limitatif, et de la comparaison qui en est faite avec un dispositif de guidage selon l'art antérieur. La description se réfère aux dessins qui l'accompagnent, dans lesquels :
- la figure 1 montre un dispositif de guidage de grappes selon l'invention, en élévation, et les éléments des internes supérieurs qui lui sont directement associés, en coupe suivant un plan vertical ;
- les figures 2 et 3 sont des vues en coupe suivant un plan horizontal, respectivement au niveau des lignes II-II et III-III de la figure 1.

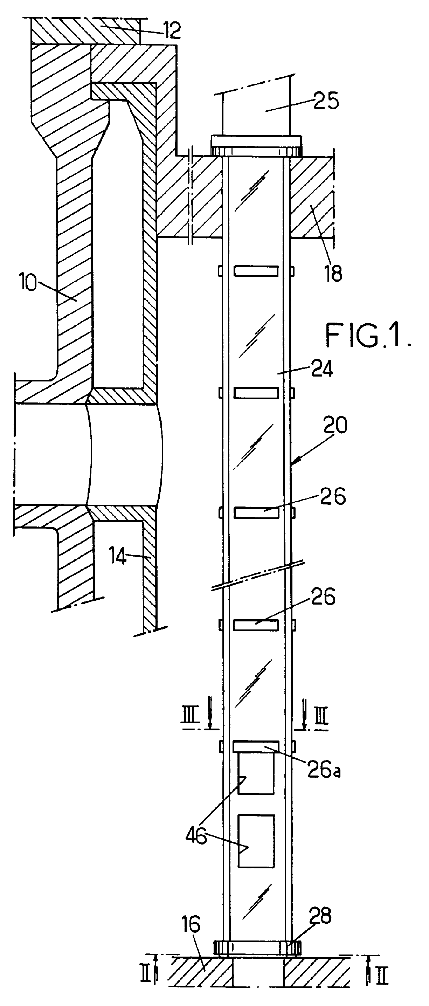

La fraction de réacteur schématisée en figure 1 a une constitution générale qui est, à l'heure actuelle, bien connue. Elle ne sera pour cette raison que brièvement décrite.

Le coeur, constitué d'assemblages combustibles juxtaposés, est contenu dans une cuve 10 de résistance à la pression, fermée par un couvercle 12. Une virole 14, supportée par la cuve, délimite un espace annulaire de descente du réfrigérant, admis par des tubulures non représentées, jusqu'à un espace ménagé sous une plaque inférieure, portant le coeur. Le réfrigérant remonte ensuite à travers le coeur, et en sort par des passages ménagés dans une plaque de coeur 16 appartenant aux internes supérieurs du réacteur.

Les internes comportent également une plaque support 18, soutenue par la cuve, reliée à la plaque de coeur par des colonnes de fixation non représentées et par des dispositifs de guidage 20, destinés chacun à recevoir une grappe de contrôle. Les grappes sont constituées d'un faisceau de crayons allongés contenant du matériau absorbant les neutrons, au nombre de vingt quatre par exemple, suspendus à une araignée dont le pommeau est fixé à une tige de commande.

Chaque dispositif 20 comporte, entre les plaques 16 et 18, une enveloppe tubulaire 24, de section approximativement carrée et, au-dessus de la plaque support 18, un prolongement 25 muni d'une plaque de fermeture (non représentée), perçée d'un trou de passage de la tige de commande.

Des plaques horizontales de guidage 26 sont réparties régulièrement le long de l'enveloppe 24. Elles sont fixées à l'enveloppe par engagement de saillies externes de ces plaques dans des encoches de l'enveloppe 24, et généralement par soudage.

Les plaques 26 situées à la partie supérieure de l'enveloppe 24, au nombre de cinq dans le mode de réalisation montré en figure 1, présentent une découpe interne telle que les plaques guident les crayons et livrent passage aux bras de l'araignée. Les crayons sont ainsi guidés de façon discontinue, à intervalles correspondant à l'écartement des plaques 26.

La disposition décrite jusqu'ici est classique.

Les plaques 26 assurent un guidage discontinu des crayons à la partie haute du dispositif. Dans cette partie haute, l'enveloppe est dépourvue d'ouvertures de sorte que le réfrigérant qui l'atteint ne s'échappe que latéralement par les jeux qui subsistent entre les saillies externes des plaques et les encoches et axialement.

Dans le mode de réalisation montré en figure 1, le dispositif ne comporte qu'une seule plaque horizontale 26a dans la zone de guidage continu. Cette plaque est reliée au pied 28 de l'enveloppe 24 par des moyens de guidage continu, et à l'enveloppe par emboîtement et/ou par soudure.

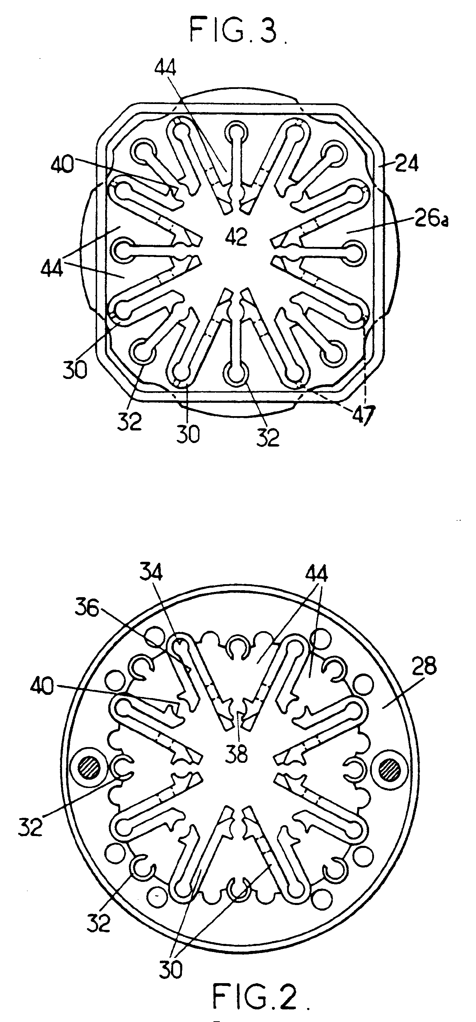

Les moyens de guidage comprennent des fourreaux 30 et des tubes fendus 32, délimitant des passages de guidage de huit crayons appartenant à une rangée interne et de seize crayons appartenant à une rangée externe dans le sens radial, ces nombres n'étant pas limitatifs. Chacun des fourreaux 30 constitue, dans sa partie la plus éloignée de l'axe dans le sens radial, un passage 34 de guidage d'un des crayons de la rangée externe, prolongé par une fente radiale 36 destinée à livrer passage à un bras de l'araignée. Les parties les plus proches de l'axe des fourreaux 30 délimitent entre elles des passages 38 et 40 de guidage des crayons de la rangée interne. Dans le cas illustré sur les figures 2 et 3, où les crayons de la rangée interne sont disposés suivant les côtés d'un carré, chaque fourreau 30 a deux branches de longueurs différentes de sorte que l'espace compris entre les parties internes des fourreaux constitue un canal central 42 en forme d'étoile, n'ayant pas de communication directe avec l'extérieur dans le sens radial, sauf par l'intermédiaire des passages de guidage 38 et 40. Deux fourreaux successifs délimitent entre eux un canal périphérique 44 de forme triangulaire. Tous ces canaux périphériques communiquent entre eux (figure 3). La pression qui y règne est pratiquement la même que la pression à l'extérieur de l'enveloppe, étant donné qu'ils communiquent avec l'extérieur par de larges ouvertures 46 de l'enveloppe. Ces ouvertures sont de forme approximativement rectangulaire. La plus haute est placée juste au-dessous de la plaque 26a.

Chacun des tubes 32 de guidage d'un crayon de la rangée externe est placée entre deux fourreaux adjacents, au fond d'un des canaux périphériques 44. Il ne comporte aucune lumière radiale de mise en communication de l'intérieur du tube avec le canal périphérique. Au contraire, des trous 47 sont régulièrement répartis le long de la génératrice externe de chacun des passages 34 pour mettre en dépression la face externe des crayons lorsque la grappe occupe le dispositif de guidage. On voit que :
- le canal central étant en surpression par rapport aux canaux périphériques et à l'extérieur de l'enveloppe, les huit crayons situés les plus près de l'axe sont soumis à une force dirigée radialement vers l'extérieur et plaquée vers l'extérieur, ce qui évite leur mise en vibration et une usure rapide sur les plaques 26 ;
- les crayons périphériques placés dans les passages 34 des fourreaux 30 sont également soumis à une force de pression dirigée radialement vers l'extérieur ;
- les crayons occupant les tubes fendus 32 sont exposés sur leur face interne à une pression inférieure à celle qui règne sur la face externe, du fait que le réfrigérant est à vitesse élevée dans les canaux périphériques, tandis que la face externe est en regard d'un espace qui communique avec l'entrée de la zone de guidage continu. Ces crayons sont donc plaqués vers l'intérieur, malgré l'effort radial dû à l'écoulement dans la zone de guidage discontinu, dont la composante radiale est très faible.

Grâce à la supression du risque d'excitation des crayons en vibration, on peut réduire la longueur de la zone de guidage continu par rapport à la celle adoptée dans un dispositif de type classique de même hauteur totale. Dans la pratique, on peut réduire la hauteur de cette zone à la course de l'amortisseur équipant l'assemblage combustible, c'est-à-dire environ 600 mm dans un réacteur représentatif.

## Revendications

1. Dispositif de guidage vertical de grappe de contrôle de réacteur nucléaire, ladite grappe comprenant un faisceau de crayons répartis en deux rangées coaxiales, une rangée interne et une rangée externe, et suspendus à une araignée à bras radiaux portée par une tige verticale de commande de la grappe, permettant de déplacer la grappe entre une position basse où elle est insérée à peu près complètement dans le coeur du réacteur et une position haute où elle se trouve dans des équipements internes supérieurs du réacteur,
comprenant : une enveloppe tubulaire (24) ; des plaques horizontales de guidage (26) réparties le long de l'enveloppe et découpées de façon à livrer passage à l'araignée et à guider les crayons ; des moyens de guidage continu des crayons dans la partie basse de l'enveloppe, comprenant des tubes (32) et des fourreaux (30) de guidage de crayons délimitant des fentes de largeur suffisante pour livrer passage aux bras de l'araignée, destinés à soustraire les crayons à l'action de l'écoulement turbulent du réfrigérant qui sort du coeur, qui pénètre dans l'enveloppe et qui en sort par des ouvertures de sortie du réfrigérant (46) percées dans l'enveloppe, à la partie basse de cette dernière, caractérisé en ce que
les fourreaux (30) délimitent entre eux des passages (40) de guidage des crayons de la rangée interne et séparent le canal central (42) de réfrigérant des canaux périphériques (44) qui communiquent entre eux, dans lesquels débouchent les ouvertures (46) de sortie du réfrigérant.

2. Dispositif selon la revendication 1, caractérisé en ce que la partie externe dans le sens radial de chaque fourreau (30) délimite un passage (34) de guidage d'un crayon de la rangée externe et est percée de trous, dirigés radialement vers l'extérieur, de mise en communication avec les canaux périphériques (44).

3. Dispositif selon la revendication 2, caractérisé en ce que les tubes (32), destinés à guider les crayons de la rangée externe autres que ceux guidés par les fourreaux sont disposés entre les fourreaux et présentent une fente radiale de passage du bras correspondant de l'araignée.

4. Dispositif selon la revendication 1, 2 ou 3, caractérisé en ce que l'enveloppe (24) est démunie d'ouverture au-dessus de ladite partie basse, autre que les jeux entre plaques de guidage (26) et enveloppe (24)

## Patentansprüche

1. Vorrichtung zur vertikalen Führung eines Steuerstabbündels eines Kernreaktors, wobei die Stäbe des Bündels auf zwei koaxiale Gruppen verteilt sind, eine innere und eine äußere, und an einer Spinne mit radialen Armen aufgehängt sind, die von einem vertikalen Stab zur Steuerung des Bündels gehalten wird, welche es ermöglicht, das Bündel zwischen einer tiefen Position, in der es in etwa vollständig in den Reaktorkern eingeführt ist, und einer hohen Position zu bewegen, in der es sich in der oberen Innenausrüstung des Reaktors befindet, mit:
einer rohrförmigen Hülle (24); horizontalen Führungsplatten (26), die entlang der Hülle verteilt sind und zugeschnitten sind, um einen freien Durchgang für die Spinne zu schaffen und die Stäbe zu führen; Führungseinrichtungen zur durchgehenden Führung der Stäbe im unteren Bereich der Hülle, die Rohre (32) und Hülsen (30) zur Führung der Stäbe umfassen, welche Schlitze begrenzen, deren Breite ausreichend ist, um einen Durchgang für die Arme der Spinne zu schaffen, und die vorgesehen sind, um die Stäbe der Wirkung der turbulenten Strömung des aus dem Kern austretenden Kühlmittels zu entziehen, das in die Hülle eindringt und sie durch in die Hülle in ihrem unteren Bereich gebrochene Kühlmittelaustrittsöffnungen (46) verläßt,
dadurch gekennzeichneit
dass die Hülsen (30) zwischen sich Führungsdurchgänge (40) für die Stäbe der inneren Gruppe begrenzen und den zentralen Kühlmittelkanal (42) von den untereinander verbundenen peripheren Kanälen (44) trennen, in die die Kühlmittelaustrittsöffnungen (46) münden.

2. Vorrichtung nach Anspruch 1, dadurch gekennzeichnet, daß der in radialer Richtung äußere Bereich jeder Hülse (30) einen Führungsdurchgang (34) für einen Stab der äußeren Gruppe begrenzt und radial nach außen gerichtete Löcher aufweist zur Herstellung einer Verbindung mit den peripheren Kanälen (44).

3. Vorrichtung nach Anspruch 2, dadurch gekennzeichnet, daß die zum Führen der Stäbe der äußeren Gruppe bestimmten Rohre (32) mit Ausnahme jener, die von den Hülsen geführt werden, zwischen den Hülsen angeordnet sind und einen radialen Schlitz für den Durchgang des entsprechenden Arms der Spinne aufweisen.

4. Vorrichtung nach Anspruch 1, 2 oder 3, dadurch gekennzeichnet, daß die Hülle (24) oberhalb des unteren Bereichs abgesehen von Spiel zwischen den Führungsplatten (26) und der Hülle (24) frei von Öffnungen ist.

## Claims

1. Device for the vertical guidance of a control rod cluster of a nuclear reactor, said cluster comprising a bundle of rods distributed in two mutually coaxial rows, an inner row and an outer row, and suspended from a radial-arm spider carried by a vertical drive shaft of the cluster, making it possible to shift the cluster between a lower position where it is approximately completely in the core of the reactor, and a higher position in which it is in upper internal equipments of the reactor,
comprising: a tubular envelope (24); horizontal guide plates (26) distributed along the envelope and cut out to allow the passage of the spider and to guide the rods; means for continuous guidance of the rods in the lower part of the envelope, comprising tubes (32) and sleeves (30) for guiding rods, defining sufficiently wide slots to allow the passage of the arms of the spider, intended to protect the rods against the action of the turbulent flow of the coolant which leaves the core, enters the envelope and leaves it through coolant outlet openings (46) formed in the envelope, at the lower part thereof,
characterized in that the sleeves (30) define between them guide passages for the rods of the inner row and separate a central coolant channel (42) from mutually intercommunicating peripheral channels (44), in which the coolant outlet openings (46) open.

2. Device as claimed in claim 1, characterized in that the radially outer portion of each sleeve (30) defines a passage (34) for guiding a rod of the outer row and is formed with holes (46) directed radially outwardly, for communicating with the peripherals channels (44).

3. Device as claimed in claim 2, characterized in that the tubes (32) which guide those rods of the outer row other than those guided by the sleeves, are placed between the sleeves and have a radial slot for the passage of the respective arm of the spider.

4. Device as claimed in claim 1, 2 or 3, characterized in that the envelope (24) is devoid of openings above said lower part, other than the clearances between the guiding plates (26) and the envelope (24).
